# EUROPEAN PATENT SPECIFICATION

(11) **EP 0 349 092 B1**
(45) Date of publication and mention of the grant of the patent: **24.02.1993**
(21) Application number: 89201734.4
(22) Date of filing: 28.06.1989
(51) Int. Cl.: F15B 11/05

(54) **Hydraulic drive system**
Hydraulisches Antriebssystem
Système de commande hydraulique

(30) Priority: 29.06.1988 JP 159221/88
(43) Date of publication of application: 03.01.1990
(73) Proprietor: HITACHI CONSTRUCTION MACHINERY CO., LTD., Chiyoda-ku Tokyo 100 (JP)
(72) Inventor: Hirata, Toichi, Ushiku-shi Ibaraki-ken (JP)
(74) Representative: Smulders, Theodorus A.H.J., Ir.

(56) References cited:
- US-A- 4 282 898
- US-A- 4 487 018
- PATENT ABSTRACTS OF JAPAN, vol. 8, no. 12 (M-269)[1449], 19th January 1984; & JP-A-58 174 707 (DAIDEN K.K.) 13-10-1983

## Description

### Background of the invention

The present invention relates to a hydraulic drive system comprising a hydraulic pump of the variable displacement type having displacement volume varying means; at least one hydraulic actuato driven by a hydraulic fluid discharged from said hydraulic pump for driving a working member; a directional control valve for controlling the flow of the hydraulic fluid supplied from said hydraulic pump to said actuator; discharge control means for controlling the flow rate of the hydraulic fluid discharged from said hydraulic pump, said discharge control means comprising drive means for driving said displacement volume varying means and load-sensing control means for controlling operation of said drive means responsive to a differential pressure between the discharge pressure of said hydraulic pump and the load pressure of said actuator to thereby hold said differential pressure at a setting value;
said load-sensing control means including a control valve having a spring for providing said setting value of the differential pressure and operated responsive to said differential pressure; and
differential pressure setting value changing means capable of changing the setting value of said differential pressure.

When the directional control valve is operated with the hydraulic pump set in a driving state, the hydraulic fluid is supplied from the hydraulic pump to the actuator via the directional control valve for driving the actuator. During this time, the control valve is operated responsive to a differential pressure between the discharge pressure of the hydraulic pump and the load pressure of the actuator for controlling operation of the drive cylinder unit. The discharge rate of the hydraulic pump is thus controlled such that the differential pressure is held at a setting value corresponding to a force of the spring.

If in a hydraulic drive system as described above, the differential pressure between the discharge pressure of the hydraulic pump and the load pressure of the actuator would be controlled exclusively by the spring force, only one unique value for the differential pressure would be available. In that case the relationship between a stroke of the control lever for the directional control valve and an operating speed of the actuator is antinomic such that the maximum speed would be lowered if the relationship, by mounting a weak spring in the control valve is set to give a characteristic of small slope for enlarging the metering region, whereas the metering capability would be deteriorated if the relationship, by mounting a strong spring is set to give a characteristic of large slope for increasing the maximum speed. In view of such antinomic nature, the relationship is usually set to give a characteristic of large slope at the expense of the metering region with greater emphasis paid to the working capability. Accordingly, even when the control lever of the directional control valve is shifted to a small extent in an attempt at operating the actuator slightly to carry out fine operation of a working member (not shown) driven by the actuator, the fine operation is restricted by the actuator speed dependent on a characteristic of large slope in the above described hydraulic drive system. Specifically, the characteristic of large slope leads to the increased ratio of the stroke of the control lever to the actuator speed, making it difficult to obtain operation of the working member at a finely adjusted speed. The desired operation of the working member is thus hard to achieve. Further, when carrying out the fine operation, an operator tends to feel fatigued more rapidly with the reduced metering region.

In US-A-4,487,018 is described the possibility of changing the spring characteristic of the spring mounted in the control valve by applying a hydraulic pressure signal to said control valve in order to change the differential pressure between the discharge pressure of the hydraulic pump and the load pressure of the actuator.

By way of example, such fine operation is needed in the digging work performed by hydraulic excavators. In the fine operation mode, a boom, an arm, a bucket, etc. provided as the working members are operated to carefully dig the earth around pipes or the like while avoiding contact between the working members and pipes buried in the ground.

### Summary of the invention

The object of the present invention is to provide a hydraulic drive system which enables an operator to select different modes of operation of an actuator i.e. at ordinary working speed or at a finely adjusted speed.

To achieve the above object the hydraulic drive system according to the present invention comprises instruction means operable by an operator for delivering a command signal to instruct selection of a control mode of said discharge control means between a control mode suitable for ordinary work and a control mode suitable for fine control of said working member; and
a controller for determining a differential pressure modifying value corresponding to the command signal from said instruction means to operate said differential pressure setting value changing means in such a manner that said setting value of the differential pressure becomes relatively large when said command signal instructs selection of said control mode suitable for ordinary work while said setting value of the differential pressure becomes relatively small when said command signal instructs selection of said control mode suitable for fine control of said working member;
said controller including storage means for storing at least one differential pressure modifying value, and arithmetic means for selecting said differential pressure modifying value to deliver a corresponding control signal only when said command signal instructs selection of said control mode suitable for fine control of the working member;
said differential pressure setting value changing means including control force applying means for applying a control force corresponding to the control signal to one of opposed drive parts of said control valve.

When no change in the differential pressure is instructed from the instruction means, the differential pressure setting means sets an ordinary differential pressure target value suitable for the ordinary work. When a change in the differential pressure is instructed from the instruction means, the differential pressure setting means sets a differential pressure target value smaller than usual and suitable for the work which requires fine operation. Thus, since the setting value of the differential pressure becomes larger during the ordinary work, the displacement volume of the hydraulic pump is controlled such that the differential pressure between the discharge pressure of the hydraulic pump and the load pressure of the actuator is held at that larger setting value, thereby supplying the hydraulic fluid from the hydraulic pump to the actuator at a relatively large flow rate. This permits to increase the actuator speed for carrying out the ordinary work. On the contrary, since the setting value of the differential pressure becomes smaller during the work which requires fine operation, the displacement volume of the hydraulic pump is so controlled as to hold the differential pressure at that smaller setting value, thereby supplying the hydraulic fluid from the hydraulic pump to the actuator at a relatively small flow rate. This permits to realize operation of the actuator at a finely adjusted speed for carrying out the work which requires fine operation.

In the above described embodiment of the system according to the invention the load sensing means for controlling operation of the drive means for driving the displacement volume varying means of the hydraulic pump includes a control valve, having a spring for providing the setting value of the differential pressure, said control valve being operated responsive to said differential pressure.

In an alternative embodiment this control valve is dispensed with and replaced by other means fulfilling the same function. This alternative embodiment of the system according to the invention comprises instruction means operable by an operator for delivering a command signal to instruct selection of a control mode of said discharge control means between a control mode suitable for ordinary work and a control mode suitable for fine control of said working member;
said load-sensing control means including detector means for detecting the differential pressure between the discharge pressure of said hydraulic pump and the load pressure of said actuator, a controller for delivering control signals when the differential pressure detected by said detector means is different from a setting value, and valve means driven by said control signals;
said controller and said valve means also functioning as said differential pressure setting value changing means;
said controller including a storage means for storing a plurality of differential pressure target values including a first relatively large differential pressure target value and a second relatively small differential pressure target value, and arithmetic means for selecting as said differential pressure setting value said first relatively large differential pressure target value when said command signal from said instruction means instructs selection of said control mode suitable for the ordinary work and selecting as said differential pressure setting value said second relatively small differential pressure target value when said command signal instructs said control mode suitable for fine control of the working member.

### Brief description of the drawings

Fig. 1 is a diagram showing the schematic configuration of a hydraulic drive system according to a first embodiment of the present invention.

Fig. 2 is a block diagram showing the configuration of a controller equipped in the first embodiment.

Fig. 3 is a flowchart showing the processing sequence implemented by the controller shown in Fig. 2.

Fig. 4 is a graph showing characteristics obtained in the first embodiment.

Fig. 5 is a diagram showing the schematic configuration of a hydraulic drive system according to a second embodiment of the present invention.

Fig. 6 is a diagram showing the schematic configuration of a hydraulic drive system according to a third embodiment of the present invention.

Fig. 7 is a block diagram showing the configuration of a controller equipped in the third embodiment.

### Detailed Description of the Preferred Embodiments:

Hereinafter, preferred embodiments of the present invention will be described with reference to the drawings.

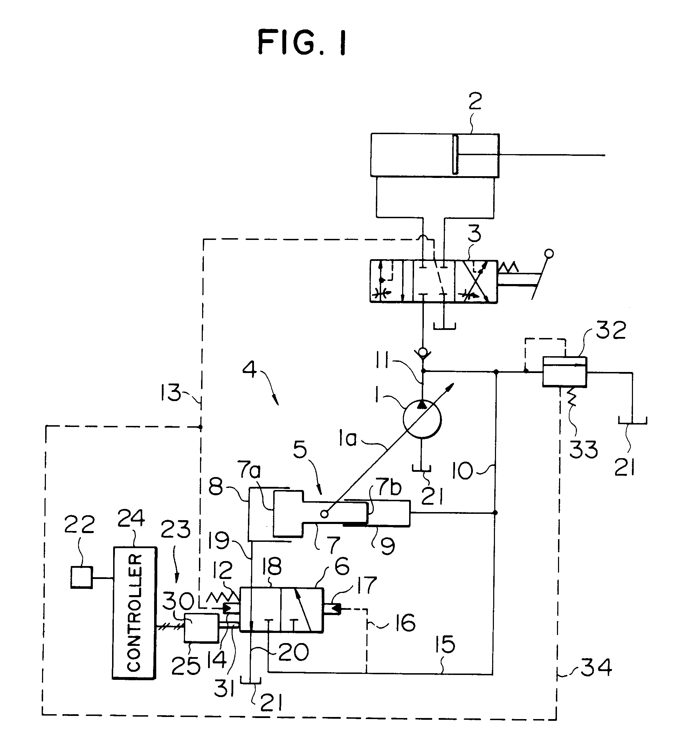

Fig. 1 is a circuit diagram showing the basic configuration of a first embodiment of the present invention. A hydraulic drive system according to this embodiment comprises a hydraulic pump 1 of the variable displacement type having a swash plate 1a which constitutes displacement volume varying means, a hydraulic actuator 2 driven by a hydraulic fluid discharged from the hydraulic pump 1, a directional control valve 3 for controlling a flow of the hydraulic fluid supplied from the hydraulic pump 1 to the actuator 2, and a discharge control device 4 for controlling a flow rate of the hydraulic fluid discharged from the hydraulic pump 1. The discharge control device 4 comprises a drive cylinder unit, i.e. regulator 5, for driving a swash plate 1a of the hydraulic pump 1 to control the displacement volume, and a load-sensing control device 6 for controlling operation of the regulator 5 to hold a differential pressure between a discharge pressure of the hydraulic pump 1 and a load pressure of the actuator 2 at a setting value, thereby controlling the discharge rate of the hydraulic pump 1.

The regulator 5 comprises a piston member 7 linked with the swash plate 1a of the hydraulic pump 1 and having a larger-diameter pressure receiving portion 7a and a smaller-diameter pressure receiving portion 7b at the opposite ends, a first cylinder 8 into which is inserted the larger-diameter pressure receiving portion 7a of the piston member 7, and a second cylinder 9 into which is inserted the smaller-diameter pressure receiving portion 7b of the piston member 7. The second cylinder 9 is communicated with a discharge line 11 for the hydraulic pump 1 through a line 10.

The load-sensing control device 6 comprises a control valve 18 which includes a spring 12 for setting the differential pressure between the discharge pressure of the hydraulic pump 1 and the load pressure of the actuator 2, a drive part 14 supplied with the load pressure of the actuator 2 through a line 13, and a drive part 17 supplied with the discharge pressure of the hydraulic pump 1 through lines 15, 16. The force of the spring 12 is set to such a value that the differential pressure determined by the spring force becomes a level smaller than usual and suitable for the work which requires fine operation. The first cylinder 8 of the regulator 5 is connected to the control valve 18 through a line 19. When the control valve 18 is at a left-hand position as viewed on the drawing sheet, the first cylinder 8 is communicated with a tank 21 through a line 20 so that the pressure in the first cylinder 8 becomes equal to a tank pressure. When the control valve 18 is at a right-hand position as viewed on the drawing sheet, the first cylinder 8 is communicated with the discharge line 11 through the lines 15, 10 so that the pressure in the first cylinder 8 becomes equal to the discharge pressure of the hydraulic pump 1. When the control valve 18 is at an intermediate position, the first cylinder 8 is communicated with both the tank 21 and the discharge line 11 at the ratio corresponding to that position, so that the pressure in the first cylinder 8 becomes a some level between the tank pressure and the pump discharge pressure corresponding to the position of the control valve 18.

In addition to the above configuration, the hydraulic drive system of the first embodiment further comprises an instruction unit 22 operated from the exterior for instructing a change in the differential pressure between the discharge pressure of the hydraulic pump 1 and the load pressure of the actuator 2, and a differential pressure setting device 23 capable of changing the setting value of the differential pressure in response to the instruction from the instruction unit 22. The differential pressure setting device 23 comprises a controller 24 for computing and outputting a control signal, and a control force applying device 25 for producing a control force responsive to the control signal and applying the control force to the control valve 18 on the side where the spring 12 is provided.

The instruction unit 22 is connected to the controller 24, and so arranged as to output an instruction signal when operated by an operator. In this embodiment, as described later, the instruction unit 22 is operated when instructing the differential pressure suitable for the ordinary work, and not operated when instructing the differential pressure smaller than usual and suitable for the work which requires fine operation.

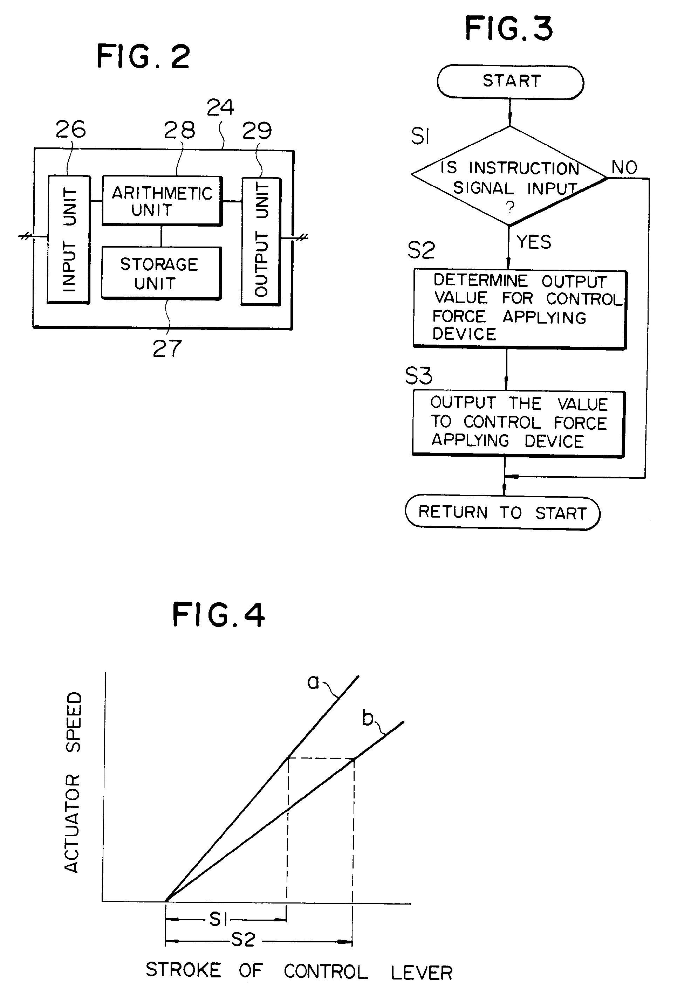

The controller 24 includes, as shown in Fig. 2, an input unit 26 for receiving the instruction signal from the instruction unit 22, a storage unit 27 for storing a differential pressure modifying value utilized to obtain a differential pressure target value suitable for the ordinary work, an arithmetic unit 28 for computing a control force corresponding to the differential pressure modifying value stored in the storage unit 27 in response to a signal output from the input unit 26, and an output unit 29 for outputting the control force computed by the arithmetic unit 28 as said control signal.

The control force applying device 25 comprises a solenoid unit 30 for receiving the control signal from the output unit 29 of the controller 24, and a plunger 31 driven by the solenoid unit 30. Upon receiving the control signal, the solenoid unit 30 produces the control force computed by the arithmetic unit 28, the control force being transmitted to the control valve 18 through the plunger 31.

In the discharge line 11 of the hydraulic pump 1, there is also provided an unload valve 32 which has a spring 33 for setting a minimum discharge pressure of the hydraulic pump 1 when the directional control valve 3 is at its neutral position. In order to ensure the differential pressure between the discharge pressure of the hydraulic pump 1 and the load pressure of the actuator 2, the load pressure is introduced through a line 34 to one end of the unload valve 32 on the same side as the spring 33, and the spring 33 is arranged to have a setting value somewhat larger than that of the spring 12 associated with the control valve 18.

Operation of the hydraulic control system of this embodiment thus constructed will be described below.

The hydraulic pump 1 is arranged such that when the swash plate 1a is at a minimum tilting position, the minimum discharge rate is ensured by an engine (not shown) set in operation. Thus, when the directional control valve 3 is at its neutral position, the minimum discharge rate produces a discharge pressure of the hydraulic pump 1 equal to the minimum discharge pressure determined by the unload valve 32. The minimum discharge pressure is introduced to the second cylinder 9 of the regulator 5. At the same time, the minimum discharge pressure is also introduced to the drive part 17 of the control valve 18, so that the control valve 18 is driven into a state as shown in the right-hand position by overcoming the force of the spring 12, or the resultant of force of the spring 12 and control force from the control force applying device 25 when the latter is in operation. This introduces the minimum discharge pressure to also the first cylinder 8 of the regulator 5 through a line 15, whereupon the piston 7 is moved to rightward, as viewed on the drawing sheet, due to the difference in area between the pressure receiving portions 7a and 7b for holding the swash plate 1a of the hydraulic pump 1 at a minimum tilting position.

When the directional control valve 3 is switched under that condition, the hydraulic fluid is introduced from the hydraulic pump 1 to the actuator 2 through the directional control valve 3, whereupon the actuator 2 is driven to operate the working member (not shown). At the same time, the load pressure is generated in the actuator 2 and then introduced to the drive part 14 of the control valve 18 so that the control valve 18 is driven into a state as shown in the left-hand position. The first cylinder 8 is thus communicated with the tank 21 to move the piston 7 of the regulator 5 leftward, as viewed on the drawing sheet, for increasing the discharge rate of the hydraulic pump 1. This increase in the discharge rate is continued until the force due to the differential pressure between the discharge pressure of the hydraulic pump 1 and the load pressure of the actuator 2 is balanced by the force of the spring 12, or the resultant of force of the spring 12 and control force from the control force applying device 25 when the latter is in operation. As a consequence, the discharge rate of the hydraulic pump 1 is controlled such that the differential pressure between the discharge pressure of the hydraulic pump 1 and the load pressure of the actuator 2 is held at a setting value determined by the force of the spring 12, or a setting value determined by both the force of the spring 12 and the control force from the control force applying device 25 when the latter is in operation.

The differential pressure between the discharge pressure of the hydraulic pump 1 and the load pressure of the actuator 2 in the above operation process is set to a different value responsive to an instruction issued from the instruction unit 22 shown in Fig. 1 for modifying the differential pressure. This will now be described with reference to a flowchart of Fig. 3 showing the control sequence carried out by the arithmetic unit 28 of the controller 24.

When the instruction unit 22 is operated aiming at the ordinary work, an instruction signal is input to the controller 24. The arithmetic unit 28 of the controller 24 determines in step S1 of Fig. 3 whether the instruction signal is input from the instruction unit 22 to the arithmetic unit 28 through the input unit 26 of the controller 24. Since the instruction signal is input in this case, the above determination is responded by YES and the control goes to step S2. In the step S2, the differential pressure modifying value stored in the storage unit 27 is read out, in response to the instruction signal, into the arithmetic unit 28 in which the control force is computed corresponding to that differential pressure modifying value. The control then goes to step S3 where a control signal is output from the arithmetic unit 28 to the control force applying device 25.

The control force applying device 25 shown in Fig. 1 is operated in response to the control signal, so that the plunger 31 pushes the end of the control valve 18 on the same side as the spring 12 with the control force computed by the arithmetic unit 28. The discharge rate of the hydraulic pump 1 is thus controlled such that the differential pressure between the discharge pressure of the hydraulic pump 1 and the load pressure of the actuator 2 becomes a setting value determined by the resultant of force of the spring 12 and control force applied from the control force applying device 25. Accordingly, the hydraulic fluid is discharged from the hydraulic pump 1 at a relatively large flow rate and then supplied to the actuator 2. This allows the actuator 2 to be driven at a relatively large actuator speed corresponding to the stroke of control lever for the directional control valve 3, as indicated by a characteristic line a in Fig. 4, with the result that the desired ordinary work can be performed by the working member (not shown) driven by the actuator 2.

On the other hand, when the instruction unit 22 is not operated aiming at the special work which requires fine operation, no instruction signal is input to the arithmetic unit 28 of the controller 24, and hence the determination made in step S1 of Fig. 3 is responded by NO. Therefore, the arithmetic unit 28 does not carry out computation to determine the control force, and the discharge rate of the hydraulic pump 1 is so controlled as to produce the differential pressure in match with the force of the spring 12. Accordingly, the hydraulic fluid is discharged from the hydraulic pump 1 at a relatively small flow rate and then supplied to the actuator 2. This allows the actuator 2 to be driven at a relatively small actuator speed corresponding to the stroke of control lever for the directional control valve 3, as indicated by a characteristic line b in Fig. 4, with the result that the working member (not shown) driven by the actuator 2 can perform the special work, which requires fine operation, at the relatively small ratio of a change in the actuator speed to the stroke of control lever.

According to the first embodiment, as described above, operating the instruction unit 22 increases the differential pressure between the discharge pressure of the hydraulic pump 1 and the load pressure of the actuator 2, thereby enabling to perform the ordinary work in a conventional manner. With the instruction unit 22 not operated, the differential pressure is lowered so that the flow rate supplied to the actuator 2 at the same stroke of control lever as that in the ordinary work is reduced to facilitate operation of the actuator 2 at a finely adjusted speed for permitting fine operation with ease.

Further, as will be seen from the characteristic lines a, b in Fig. 4, the stroke of control lever S2 necessary for reaching a certain actuator speed when the instruction unit 22 is not operated is larger than the stroke of control lever S1 necessary for reaching a certain actuator speed when the instruction unit 22 is operated. Namely, the metering region in the former case becomes larger than that in the latter case, and this allows the operator to feel less fatigued during operation.

In the foregoing embodiment, the value obtained by subtracting the differential pressure target value, given by the setting value of the spring 12, from the differential pressure target value suitable for the ordinary work is stored, as the the differential pressure modifying value, in the storage unit 27 of the controller 24. But, it is also possible to store the differential pressure target value suitable for the ordinary work as the the differential pressure modifying value, and then subtract the differential pressure target value, given by the setting value of the spring 12, from that stored value in the arithmetic unit.

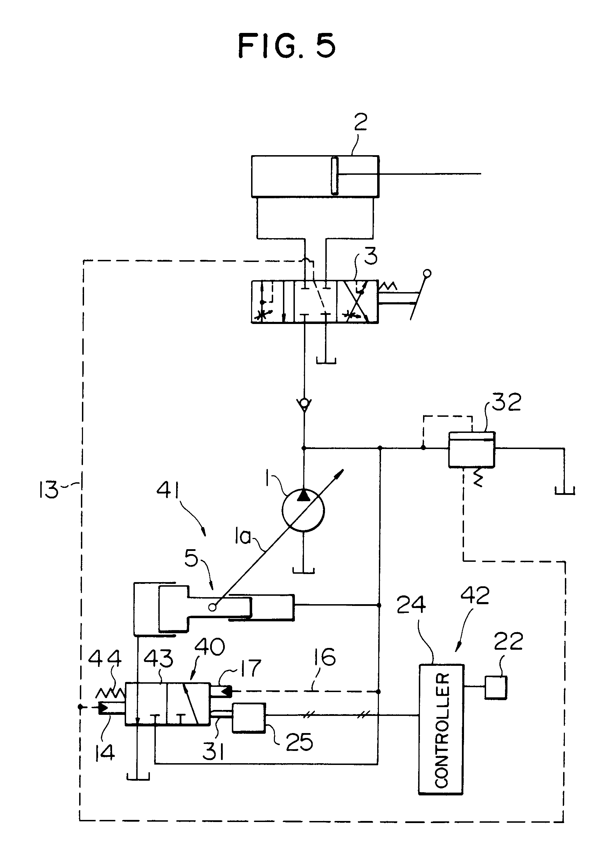

A second embodiment of the present invention will be described below with reference to Fig. 5. The second embodiment includes, similarly to the above first embodiment shown in Fig. 1, a discharge control device 41 comprising the regulator 5 and a load-sensing control device 40, and a differential pressure setting device 42 comprising the controller 24 and the control force applying device 25. In this embodiment, however, a spring 44 of a control valve 43, which constitutes the load-sensing control device 40 and determines the differential pressure between the discharge pressure of the hydraulic pump 1 and the load pressure of the actuator 2, is set to provide such a spring force as producing the relatively large differential pressure suitable for the ordinary work. Also, the control force applying device 25 is arranged to apply the control force of the plunger 31 to the end of the control valve 43 on the side opposite to the spring 44, and the differential pressure modifying value stored in the arithmetic unit 27 (see Fig. 2) of the controller 24 is employed for obtaining the differential pressure target value suitable for the work which requires fine operation.

In the second embodiment thus constructed, when the instruction unit 22 is not operated, the control force applying device 25 shown in Fig. 1 is also not operated. Therefore, the discharge rate of the hydraulic pump 1 is controlled to produce the large differential pressure balanced by the force of the spring 44, resulting in the relationship between the stroke of control lever and the actuator speed as indicated by the characteristic line a in Fig. 4. When the instruction unit 22 is operated, the control force applying device 25 is also operated, in a like manner to the first embodiment, to apply the control force in a direction opposite to the force of the spring 44 of the control valve 43. The discharge rate of the hydraulic pump 1 is thus controlled to produce the small differential pressure balanced by the difference between the force of the spring 44 and the control force, resulting in the relationship between the stroke of control lever and the actuator speed as indicated by the characteristic line b in Fig. 4.

In this way, unlike the first embodiment, the second embodiment provides the differential pressure suitable for the ordinary work when the instruction unit 22 is not operated, whereas it provides the differential pressure suitable for the work which requires operation of the actuator 2 at a finely adjusted speed, when the instruction unit 22 is operated. The remaining operation and effect are the same as those in the first embodiment.

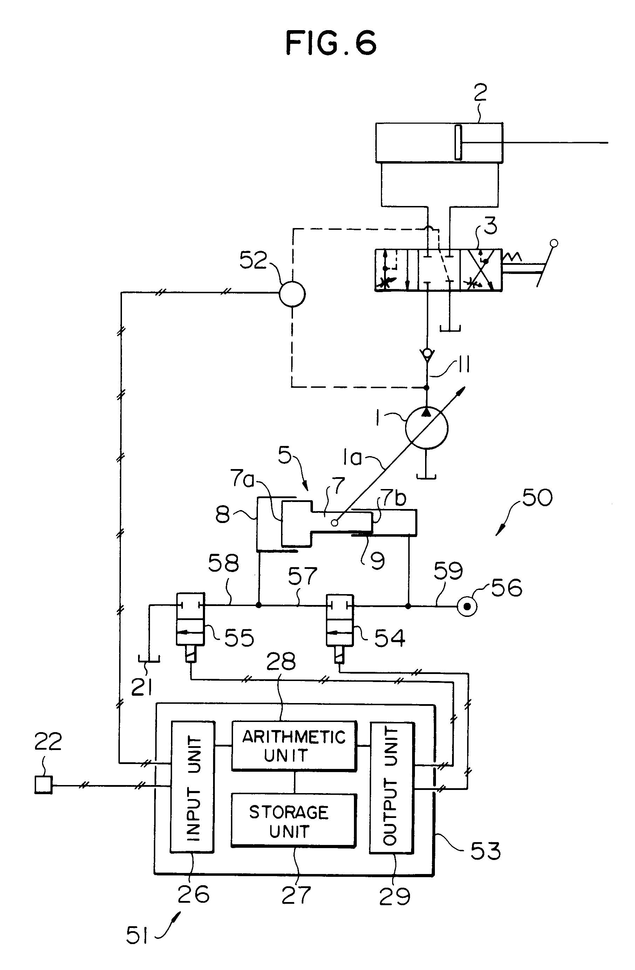

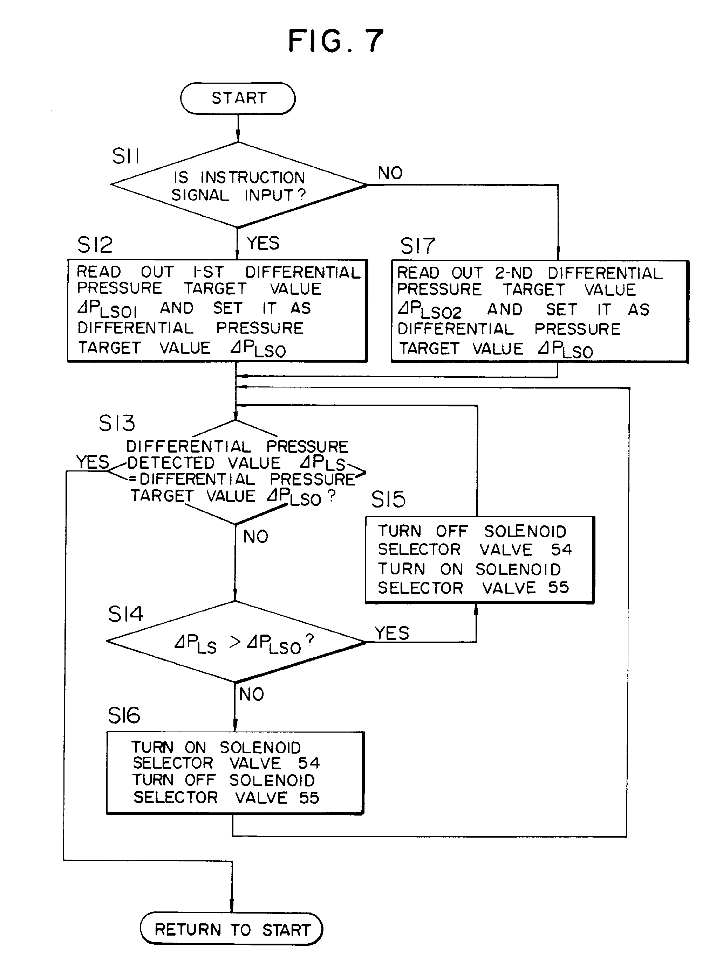

A third embodiment of the present invention will be described below with reference to Figs. 6 and 7.

While the foregoing first and second embodiments have been arranged as directly applying the discharge pressure of the hydraulic pump 1 and the load pressure of the actuator 2 to the opposite drive parts of the control valve, respectively, the third embodiment is arranged to make control using electric signals obtained dependent on the differential pressure between the discharge pressure of the hydraulic pump 1 and the load pressure of the actuator 2.

More specifically, in the third embodiment, a discharge control device 50 comprises the regulator 5 and a load-sensing control device 51. The load-sensing control device 51 comprises a differential pressure sensor 52 for detecting the differential pressure between the discharge pressure of the hydraulic pump 1 and the load pressure of the actuator 2 and then outputting it in the form of an electric signal, a controller 53 for receiving the detected signal from the differential pressure sensor 52, two solenoid selector valves 54, 55 driven by control signals from the controller 53, and a hydraulic source 56. The solenoid selector valve 54 is disposed in a line 57 communicating between the first cylinder 8 and the second cylinder 9 of the regulator 5, whereas the solenoid selector valve 55 is disposed in a line 58 communicating the first cylinder 8 with the tank 21. The hydraulic source 56 is connected to the second cylinder 9 through a line 59.

This embodiment also has the instruction unit 22 which is operated during the ordinary work as with the first embodiment, and which issues an instruction signal input to the controller 53.

The controller 53 includes, similarly to the controller 24 in the first embodiment shown in Fig. 2, the input unit 26, the storage unit 27, the arithmetic unit 28 and the output unit 29. The storage units 27 stores therein a relatively large first differential pressure target value Δ P LS01 suitable for the ordinary work and a relatively small second differential pressure target value Δ P LS02 suitable for the special work which requires fine operation. In this embodiment, the controller 53 serves also as differential pressure setting means capable of changing a setting value of the differential pressure responsive to an instruction from the instruction unit 22.

More specifically, with the third embodiment, when the instruction unit 22 is operated in the driving of the actuator 2 upon operation of the directional control valve 3, the instruction signal is input to the controller 53, and the determination of step S11 indicated in Fig. 7 is made in the arithmetic unit 28 of the controller 53. In this case, since that determination is responded by YES, the control goes to step S12. The step S12 reads the relatively large first differential pressure target value Δ P LS01 out of the differential pressure target values stored in the storage unit 27 of the controller 53 into the arithmetic unit 28, as a differential pressure target value Δ P LS0, followed by proceeding to step P13.

The step P13 compares the differential pressure between the discharge pressure of the hydraulic pump 1 and the load pressure of the actuator 2 actually detected by the differential pressure sensor 52, i.e., differential pressure detected value Δ P LS, with the differential pressure target value Δ P LS0 in the arithmetic unit 28 of the controller 53. If these values are not equal to each other, the control goes to step S14. The step S14 determines whether or not the differential pressure detected value Δ P LS is larger than the differential pressure target value Δ P LS0. If so (YES), the control goes to step S15. The step S15 outputs control signals from the arithmetic unit 28 through the output unit 29, one of which turns off the solenoid selector valve 54 and the other of which turns on the solenoid selector valve 55, respectively.

Thus, the solenoid selector valve 54 is held in a state as shown in Fig. 6, and the solenoid selector valve 55 is switched to a state as shown in the lower position for communicating the first cylinder 8 of the regulator 5 with the tank 21. The piston member 7 of the regulator 5 is now moved leftward, as viewed on the drawing sheet, under the hydraulic pressure of the hydraulic source. As a result, the discharge rate of the hydraulic pump 1 is controlled for being reduced such that Δ P LS becomes equal to Δ P LS0.

If the determination of the step S14 indicated in Fig. 7 is responded by NO and the differential pressure detected value Δ P LS is smaller than the differential pressure target value Δ P LS0, the control goes to step S16. The step S16 outputs control signals from the arithmetic unit 28 through the output unit 29, one of which turns on the solenoid selector valve 54 and the other of which turns off the solenoid selector valve 55, respectively. Thus, the solenoid selector valve 55 is held in a state as shown in Fig. 6, and the solenoid selector valve 54 is switched to a state as shown in the lower position for communicating the hydraulic source 56 with both the first and second cylinders 8, 9 of the regulator 5. The piston member 7 of the regulator 5 is now moved rightward, as viewed on the drawing sheet, due to the difference in area between the larger-diameter pressure receiving portion 7a and the smaller-diameter pressure receiving portion 7b of the piston member 7. As a result, the discharge rate of the hydraulic pump 1 is controlled for being increased such that Δ P LS becomes equal to Δ P LS0. If Δ P LS is determined equal to Δ P LS0 in the step S13, the control returns to the start.

In other words, when the instruction unit 22 is operated, the discharge rate of the hydraulic pump 1 is controlled to produce the differential pressure corresponding to the relatively large first differential pressure target value Δ P LS01, and the hydraulic fluid is supplied at the controlled flow rate from the hydraulic pump 1 to the actuator 2 through the directional control valve 3 for carrying out the ordinary work by the working member (not shown). The relationship between the stroke of control lever for the directional control valve 3 and the actuator speed as established in this case is similar to the above-mentioned characteristic line a shown in Fig. 4.

Then, if the instruction unit 22 shown in Fig. 6 is not operated and the determination of the step S11 in Fig. 7 is responded by NO, the control goes to step S17. The step S17 reads the relatively small second differential pressure target value Δ P LS02 out of the differential pressure target values stored in the storage unit 27 of the controller 53 into the arithmetic unit 28, as a differential pressure target value Δ P LS0, followed by proceeding to step P13. The processing executed in the step 13 and the subsequent steps is the same as that in the above case, and hence the description is omitted here.

In other words, when the instruction unit 22 is not operated, the discharge rate of the hydraulic pump 1 is controlled to produce the differential pressure corresponding to the relatively small second differential pressure target value Δ P LS02, and the hydraulic fluid is supplied at the controlled flow rate from the hydraulic pump 1 to the actuator 2 through the directional control valve 3 for carrying out the work, which requires fine operation, by the working member (not shown). The relationship between the stroke of control lever for the directional control valve 3 and the actuator speed as established in this case is similar to the above-mentioned characteristic line b shown in Fig. 4.

As with the foregoing first and second embodiments, the third embodiment can also make smaller the ratio of a change in the actuator speed to the stroke of control lever for the directional control valve 3 during the special work which requires fine operation. Accordingly, the actuator 2 can be operated at a finely adjusted speed with ease, while allowing the operator to feel less fatigued.

While the foregoing embodiments have been described as storing one differential pressure modifying value or two differential pressure target values in the storage unit of the controller, it is also possible to store two or more differential pressure modifying values or three or more differential pressure target values for more finely modifying the differential pressure between the discharge pressure of the hydraulic pump and the load pressure of the actuator dependent on the nature of the work to be carried out.

As described above, the present invention provides advantageous effects of permitting to carry out the ordinary work usually performed by hydraulic machines mounting thereon the hydraulic drive system of the present invention, and easily realize operation of the actuator at a finely adjusted speed for carrying out the work which requires fine operation with ease, while allowing the operator to feel less fatigued.

## Claims

1. A hydraulic drive system comprising a hydraulic pump (1) of the variable displacement type having displacement volume varying means (1a); at least one hydraulic actuator (2) driven by a hydraulic fluid discharged from said hydraulic pump for driving a working member; a directional control valve (3) for controlling the flow of the hydraulic fluid supplied from said hydraulic pump to said actuator; discharge control means (4) for controlling the flow rate of the hydraulic fluid discharged from said hydraulic pump (1), said discharge control means (4) comprising drive means (5) for driving said displacement volume varying means (1a) and load-sensing control means (6) for controlling operation of said drive means (5) responsive to a differential pressure between the discharge pressure of said hydraulic pump (1) and the load pressure of said actuator (2) to thereby hold said differential pressure at a setting value;
said load-sensing control means (6) including a control valve (18) having a spring (12) for providing said setting value of the differential pressure and operated responsive to said differential pressure; and
differential pressure setting value changing means (23) capable of changing the setting value of said differential pressure, characterized in that said hydraulic drive system further comprises:
instruction means (22) operable by an operator for delivering a command signal to instruct selection of a control mode of said discharge control means (4) between a control mode suitable for ordinary work and a control mode suitable for fine control of said working member; and
a controller (24) for determining a differential pressure modifying value corresponding to the command signal from said instruction means (22) to operate said differential pressure setting value changing means (23) in such a manner that said setting value of the differential pressure becomes relatively large when said command signal instructs selection of said control mode suitable for ordinary work while said setting value of the differential pressure becomes relatively small when said command signal instructs selection of said control mode suitable for fine control of said working member;
said controller (24) including storage means (27) for storing at least one differential pressure modifying value, and arithmetic means (28) for selecting said differential pressure modifying value to deliver a corresponding control signal only when said command signal instructs selection of said control mode suitable for fine control of the working member;
said differential pressure setting value changing means (23) including control force applying means (25) for applying a control force corresponding to the control signal to one of opposed drive parts of said control valve (18).

2. A hydraulic drive system comprising a hydraulic pump (1) of the variable displacement type having displacement volume varying means (1a); at least one hydraulic actuator (2) driven by a hydraulic fluid discharged from said hydraulic pump for driving a working member; a directional control valve (3) for controlling the flow of the hydraulic fluid supplied from said hydraulic pump to said actuator; discharge control means (50) for controlling the flow rate of the hydraulic fluid discharged from said hydraulic pump (1) said discharge control means (50) comprising drive means (5) for driving said displacement volume varying means (1a) and load-sensing control means (51) for controlling operation of said drive means (5) responsive to a differential pressure between the discharge pressure of said hydraulic pump (1) and the load pressure of said actuator to thereby hold said differential pressure at a setting value; and differential pressure setting value changing means capable of changing the setting value of said differential pressure, characterized in that
said hydraulic drive system further comprises: instruction means (22) operable by an operator for delivering a command signal to instruct selection of a control mode of said discharge control means (50) between a control mode suitable for ordinary work and a control mode suitable for fine control of said working member;
said load-sensing control means (51) including detector means (52) for detecting the differential pressure between the discharge pressure of said hydraulic pump (1) and the load pressure of said actuator (2), a controller (53) for delivering control signals when the differential pressure detected by said detector means (52) is different from a setting value, and valve means (54, 55) driven by said control signals;
said controller (53) and said valve means (54, 55) also functioning as said differential pressure setting value changing means;
said controller (53) including a storage means (27) for storing a plurality of differential pressure target values including a first relatively large differential pressure target value (ΔPLS01) and a second relatively small differential pressure target value (ΔPLS02), and arithmetic means (28) for selecting as said differential pressure setting value said first relatively large differential pressure target value (ΔPLS01) when said command signal from said instruction means (22) instructs selection of said control mode suitable for the ordinary work and selecting as said differential pressure setting value said second relatively small differential pressure target value (ΔPLS02) when said command signal instructs said control mode suitable for fine control of the working member.

## Patentansprüche

1. Hydraulisches Antriebssystem mit
einer verstellbaren Hydropumpe (1), die Einrichtungen (1a) zur Veränderung des Verdrängungsvolumens aufweist,
mindestens einem hydraulischen Betätigungselement (2), das durch eine Hydraulikflüssigkeit angetrieben wird, die von der Hydropumpe (1) für den Antrieb eines Arbeitselements gefördert wird,
einem Wegeventil (3) zur Steuerung des Durchflusses, der von der Hydropumpe zum Betätigungselement geförderten Hydraulikflüssigkeit,
Fördermengensteuereinrichtungen (4) zur Steuerung der von der Hydropumpe (1) geförderten Hydraulikflüssigkeitsmenge, wobei die Fördermengensteuereinrichtungen (4) Antriebsmittel (5) für den Antrieb der Einrichtungen (1a) zur Veränderung des Verdrängungsvolumens sowie Lasterfassungssteuereinrichtungen (6) für die Betriebssteuerung der Antriebsmittel (5) in Abhängigkeit von einem Differentialdruck zwischen dem Förderdruck der Hydropumpe (1) und dem Lastdruck des Betätigungselements (2) aufweisen, um dadurch den Differentialdruck auf einem Einstellwert zu halten, wobei die Lasterfassungssteuereinrichtungen (6) ein Steuerventil (18) enthalten, das eine Feder (12) zur Vorgabe des Differentialdruck-Einstellwerts aufweist und in Abhängigkeit vom Differentialdruck betätigt wird, und
Differentialdruck-Einstellwert-Änderungseinrichtungen (23) zur Änderung des Differentialdruck-Einstellwerts,
**dadurch** **gekennzeichnet**,
daß das hydraulische Antriebssystem ferner aufweist:
Befehlsseinrichtungen (22), die durch eine Bedienungsperson zur Lieferung eines Befehlssignals betätigbar sind, um die Auswahl eines Steuermodus der Fördermengensteuereinrichtungen (4) zwischen einem Steuermodus für den gewöhnlichen Betrieb und einem Steuermodus für die Feinsteuerung des Arbeitselements zu befehlen, und
eine Steuereinrichtung (24) zur Bestimmung eines Differentialdruck-Änderungswerts entsprechend dem Befehlssignal der Befehlsseinrichtungen (22), um die Differentialdruck-Einstellwert-Änderungseinrichtungen (23) so zu betätigen, daß der Differentialdruck-Einstellwert relativ groß wird, wenn das Befehlssignal die Auswahl des Steuermodus für den gewöhnlichen Betrieb befiehlt, während der Differentialdruck-Einstellwert relativ klein wird, wenn das Befehlssignal die Auswahl des Steuermodus für die Feinsteuerung des Arbeitselements befiehlt, wobei die Steuereinrichtung (4) Speichereinrichtungen (27) zur Speicherung mindestens eines Differentialdruck-Änderungswerts und Recheneinrichtungen (28) zur Auswahl des Differentialdruck-Änderungswerts enthalten, um ein entsprechendes Steuersignal nur dann zu liefern, wenn das Befehlssignal die Auswahl des Steuermodus für die Feinsteuerung des Arbeitselements befiehlt und wobei die Differentialdruck-Einstellwert-Änderungseinrichtungen (23) Steuerkrafteinrichtungen (25) zum Aufbringen einer dem Steuersignal entsprechenden Steuerkraft an eines der gegenüberliegenden Antriebsteile des Steuerventils (18) enthalten.

2. Hydraulisches Antriebssystem mit
einer verstellbaren Hydropumpe (1), die Einrichtungen (1a) zur Veränderung des Verdrängungsvolumens aufweist,
mindestens einem hydraulischen Betätigungselement (2), das durch eine Hydraulikflüssigkeit angetrieben wird, die von der Hydropumpe für den Antrieb eines Arbeitselements gefördert wird,
einem Wegeventil (3) zur Steuerung des Durchflusses der von der Hydropumpe zum Betätigungselement geförderten Hydraulikflüssigkeit, Fördermengensteuereinrichtungen (50) zur Steuerung der von der Hydropumpe (1) geförderten Hydraulikflüssigkeitsmenge, wobei die Fördermengensteuereinrichtungen (50) Antriebsmittel (5) für den Antrieb der Einrichtungen (1a) zur Veränderung des Verdrängungsvolumens sowie Lasterfassungssteuereinrichtungen (51) für die Betriebssteuerung der Antriebsmittel (5) in Abhängigkeit von einem Differentialdruck zwischen dem Förderdruck der Hydropumpe (1) und dem Lastdruck des Betätigungselements aufweisen, um dadurch den Differentialdruck auf einen Einstellungwert zu halten, und
Differentialdruck-Einstellwert-Änderungseinrichtungen zur Änderung des Differentialdruck-Einstellwerts,
**dadurch** **gekennzeichnet**,
daß das hydraulische Antriebssystem ferner aufweist:
Befehlsseinrichtungen (22), die durch eine Bedienungsperson zur Lieferung eines Befehlssignals betätigbar sind, um die Auswahl eines Steuermodus der Fördermengensteuereinrichtung (50) zwischen einem Steuermodus für den gewöhnlichen Betrieb und einem Steuermodus für die Feinsteuerung des Arbeitselements zu befehlen, wobei die Lasterfassungssteuereinrichtungen (51) Erfassungseinrichtungen (52) zur Erfassung des Differentialdrucks zwischen dem Förderdruck der Hydropumpe (1) und dem Lastdruck des Betätigungselements (2), eine Steuereinrichtung (53) zur Lieferung von Steuersignalen bei einer Abweichung des von den Steuereinrichtungen (52) erfaßten Differentialdrucks von einem Einstellwert und durch die Steuersignale angetriebene Ventileinrichtungen (54, 55) aufweisen, wobei die Steuereinrichtung (53) und die Ventileinrichtungen (54, 55) auch wie die Differentialdruck-Einstellwert-Änderungseinrichtungen arbeiten und wobei die Steuereinrichtung (53) Speichereinrichtungen (27) zur Speicherung von mehreren Differentialdruck-Zielwerten, einschließlich eines ersten relativ großen Differentialdruck-Zielwerts (Δ PLS02) und eines zweiten relativ kleinen Differentialdruck-Zielwerts (Δ PLS02), und Recheneinrichtungen (28) für die Auswahl des ersten relativ großen Differentialdruck-Zielwertes (Δ PLS01) als Differentialdruck-Einstellwert, wenn das Befehlssignal von den Befehlsseinrichtungen (22) die Auswahl des Steuermodus für den gewöhnlichen Betrieb befiehlt und die Auswahl des zweiten relativ kleinen Differentialdruck-Zielwerts (Δ PLS02) als Differentialdruck-Einstellwert, wenn das Befehlssignal den Steuermodus für die Feinsteuerung des Arbeitselements befiehlt, aufweisen.

## Revendications

1. Système d'entraînement hydraulique qui comporte : une pompe hydraulique (1) du type à cylindrée variable ayant un moyen (la) pour faire varier le volume de cylindrée ; au moins un vérin hydraulique (2) entraîné par un fluide hydraulique refoulé par ladite pompe hydraulique pour entraîner un élément mécanique ; un distributeur (3) pour réguler le flux de fluide hydraulique envoyé par ladite pompe hydraulique audit vérin ; un moyen de commande de refoulement (4) pour réguler le débit du fluide hydraulique refoulé par ladite pompe hydraulique (1), ledit moyen de commande de refoulement (4) comportant un moyen d'entraînement (5) pour entraîner ledit moyen (la) qui fait varier le volume de cylindrée et un moyen (6) de commande détectant la charge pour commander le fonctionnement dudit moyen d'entraînement (5) en fonction d'une pression différentielle entre la pression de refoulement de ladite pompe hydraulique (1) et la pression de charge dudit vérin (2) afin de maintenir ainsi ladite pression différentielle à une valeur de consigne ;
ledit moyen de commande (6) détectant la charge incluant une vanne de commande (18) qui comporte un ressort (12) pour fournir ladite valeur de consigne de la pression différentielle et étant actionné en fonction de ladite pression différentielle, et
un moyen (23) de modification de la valeur de consigne de la pression différentielle qui est capable de changer la valeur de consigne de ladite pression différentielle,
**caractérisé** en ce que ledit système d'entraînement hydraulique comporte en outre :
-un moyen d'instruction (22) actionnable par un opérateur pour délivrer un signal de commande afin d'ordonner un choix d'un mode de commande audit moyen (4) de commande de refoulement, choix entre un mode de commande approprié à un travail courant et un mode de commande approprié à un réglage fin dudit élément mécanique ;
une unité de commande (24) pour déterminer une valeur modifiant la pression différentielle en fonction du signal de commande qui provient du moyen d'instruction (22) afin de faire fonctionner ledit moyen (23) modifiant la valeur de consigne de la pression différentielle, de telle sorte que ladite valeur de consigne de la pression différentielle devienne relativement grande quand ledit signal de commande ordonne le choix dudit mode de commande approprié à un travail courant et que ladite valeur de consigne de la pression différentielle devienne relativement petite quand ledit signal de commande ordonne le choix dudit mode de commande approprié à un réglage fin dudit élément mécanique ;
ladite unité de commande (24) comportant un moyen de mémorisation (27) pour mémoriser au moins une valeur modifiant la pression différentielle, et un moyen de calcul (28) pour choisir ladite valeur modifiant la pression différentielle afin d'émettre un signal de commande correspondant uniquement lorsque ledit signal de commande ordonne le choix dudit mode de commande approprié au réglage fin dudit élément mécanique ;
ledit moyen (23) de modification de la valeur de consigne de la pression différentielle incluant un moyen (25) d'application d'une force de commande pour appliquer une force de commande correspondant au signal de commande à l'une des parties opposées d'entraînement de ladite vanne de commande (18).

2. Système d'entraînement hydraulique qui comporte : une pompe hydraulique (1) du type à cylindrée variable ayant un moyen (la) pour faire varier le volume de cylindrée ; au moins un vérin hydraulique (2) entraîné par un fluide hydraulique refoulé par ladite pompe hydraulique pour entraîner un élément mécanique ; un distributeur (3) pour réguler le flux de fluide hydraulique envoyé par ladite pompe hydraulique audit vérin ; un moyen de commande de refoulement (50) pour réguler le débit du fluide hydraulique refoulé par ladite pompe hydraulique (1), ledit moyen de commande de refoulement (50) comportant un moyen d'entraînement (5) pour entraîner ledit moyen (1a) qui fait varier le volume de cylindrée et un moyen (51) de commande détectant la charge pour commander le fonctionnement dudit moyen d'entraînement (5) en fonction d'une pression différentielle entre la pression de refoulement de ladite pompe hydraulique (1) et la pression de charge dudit vérin afin de maintenir ainsi ladite pression différentielle à une valeur de consigne ; et un moyen changeant la valeur de consigne de la pression différentielle capable de modifier la valeur de consigne de ladite pression différentielle, **caractérisé** en ce que ledit système d'entraînement hydraulique comporte en outre : un moyen d'instruction (22) actionnable par un opérateur pour délivrer un signal de commande afin d'ordonner un choix d'un mode de commande audit moyen (50) de commande de refoulement, choix entre un mode de commande approprié à un travail courant et un mode de commande approprié à un réglage fin dudit élément mécanique.
Ledit moyen de commande détectant la charge (51) incluant un moyen de détection (52) pour détecter la pression différentielle entre la pression refoulée de ladite pompe hydraulique (1) et la pression de charge dudit vérin (2), une unité de commande (53) pour émettre des signaux de commande quand la pression différentielle détectée par ledit moyen de détection (52) diffère d'une valeur de consigne, et des moyens formant vannes (54, 55) entraînés par lesdits signaux de commande ;
ladite unité de commande (53) et lesdits moyens formant vannes (54, 55) fonctionnant aussi en tant que moyens pour changer la valeur de consigne de la pression différentielle ;
ladite unité de commande (53) incluant un moyen de mémorisation (27) pour mémoriser une pluralité de valeurs cibles de la pression différentielle y compris une première valeur de consigne de la pression différentielle relativement importante (ΔPLS01) et une seconde valeur de consigne de la pression différentielle relativement faible (ΔPLS02), ainsi qu'un moyen de calcul (28) pour choisir en tant que valeur de consigne de la pression différentielle ladite première valeur de consigne de pression différentielle relativement grande (ΔPLS01) quand ledit signal de commande provenant dudit moyen d'instruction (22) ordonne le choix dudit mode de commande approprié à un travail courant, et pour choisir en tant que valeur de consigne de la pression différentielle ladite seconde valeur de consigne de pression différentielle relativement faible (ΔPLS02) quand ledit signal de commande ordonne ledit mode de commande approprié au réglage fin de l'élément mécanique.
